# EUROPÄISCHE PATENTANMELDUNG

(11) **EP 3 954 221 A1**
(43) Veröffentlichungstag der Anmeldung: **16.02.2022**
(21) Anmeldenummer: 21190582.3
(22) Anmeldetag: 10.08.2021
(51) Int. Cl.: A23J 3/14, A23J 3/22, A23J 3/26, A23L 11/00

(54) **VEGANES ODER VEGETARISCHES LEBENSMITTEL**

(30) Priorität: 10.08.2020 DE 102020121038
(71) Anmelder: endori food GmbH & Co. KG, 96135 Stegaurach (DE)
(72) Erfinder: Rosenbauer, Jochen, 96135 Stegaurach (DE); Schwenninger, Axel, 96135 Stegaurach (DE); Skrzipietz, Swen, 96135 Stegaurach (DE)
(74) Vertreter: SJW Patentanwälte

(57) **Zusammenfassung**

Die vorliegende Erfindung betrifft ein veganes oder vegetarisches Lebensmittel, insbesondere ein veganes oder vegetarisches Wurstersatzprodukt, sowie ein Verfahren zu dessen Herstellung.

## Beschreibung

### Gebiet der Erfindung

Die vorliegende Erfindung betrifft ein veganes oder vegetarisches Lebensmittel, insbesondere ein veganes oder vegetarisches Wurstersatzprodukt, sowie ein Verfahren zu dessen Herstellung.

### Hintergrund der Erfindung

Traditionelle Wurstwaren, die zum Braten, Grillen oder Backen bestimmt sind, enthalten eine Füllung aus zerkleinertem tierischen Eiweiß, tierischen Fetten sowie Salz, Gewürzen und anderen Zutaten und Zusatzstoffen. Die Füllung wird in eine Hülle aus tierischem Eiweiß gepresst, die beispielsweise aus Naturdarm oder Collagen besteht. Die Hülle aus tierischem Eiweiß ist elastisch dehnbar und schrumpft bei Hitzeeinwirkung. Sie passt sich dadurch beim Zubereiten der Wurstwaren der hitzebedingten Formänderung der Füllung an und vernetzt sich durch Hitzekoagulation mit dieser. Das in der Füllung enthaltene tierische Eiweiß koaguliert ebenfalls und verwandelt die anfänglich plastische Struktur in eine elastische. So entsteht eine homogene Zubereitung, die sich durch eine attraktive Haptik auszeichnet, welche besonders durch den elastischen initialen Bisswiderstand gekennzeichnet wird.

Bei veganen oder vegetarischen Wurstersatzprodukten konnte bisher eine solche homogene Struktur und elastische Haptik mit zufriedenstellendem Bisswiderstand nicht zufriedenstellend erzeugt werden, da zum einen die verwendeten pflanzlichen Proteine unter Hitzeeinwirkung nur wenig elastische Strukturen ausbilden und zum anderen die vegane oder vegetarische Hülle nicht die bevorzugten elastischen und bindenden Eigenschaften der Hülle aus tierischen Eiweißen hat.

Um eine fleischähnliche elastische Struktur der veganen/vegetarischen Füllmasse zu erzeugen, können dieser Verdickungsmittel wie z.B. Methylcellulose beigemischt werden, welche die Eigenschaft haben, in der Hitze durch temporäre Vernetzung elastische Strukturen zu imitieren, ohne die Saftigkeit des Endproduktes entscheidend zu verschlechtern. Allerdings verliert beim Abkühlen die Methylcellulose rasch ihre gewünschten Eigenschaften und die Füllmasse wird wieder weich und plastisch.

Die Beimischung von anderen Verdickungsmitteln und Hydrokolloiden wie etwa Guar, Carragen, modifizierten Stärken, Johannesbrotkernmehl, Alginat und anderen führt zwar auch zu einer Erhöhung des elastischen Bisswiderstandes im abgekühlten Zustand. Allerdings beeinträchtigen diese Zusätze die gewünschte Saftigkeit des Endproduktes.

Um das Problem der mangelnden Haftung der veganen/vegetarischen Hülle zu lösen, kann eine flüssige Lösung von Alginat auf die ausgeformte Füllung aufgebracht werden, welche mit einer Calciumchloridlösung vernetzt und so stabilisiert wird. Diese gelartige Hülle bietet aber bei weitem nicht den initialen elastischen Bisswiderstand einer Naturdarm- oder Collagenhülle.

Die Aufgabe der vorliegenden Erfindung besteht darin, vegane oder vegetarische Wurstersatzprodukte bereitzustellen, welche sich durch eine elastische Haptik mit zufriedenstellendem Bisswiderstand auszeichnen ohne dabei nennenswert an Saftigkeit zu verlieren.

### Zusammenfassung der Erfindung

Die Aufgabe wird durch die Bereitstellung eines erfindungsgemäßen Lebensmittels, insbesondere eines erfindungsgemäßen Wurstersatzprodukts, gelöst.

Die vorliegende Erfindung kann wie folgt zusammengefasst werden.
1. Lebensmittel umfassend a) eine Füllmasse enthaltend mindestens ein erstes Texturat, welches ein erstes Pflanzenprotein enthält, und gegebenenfalls ein zweites Texturat, welches ein zweites Pflanzenprotein enthält, und b) eine Umhüllung aus einer essbaren Membran, welche ausschließlich aus vegetarischen oder vegan Rohstoffen besteht.
2. Lebensmittel gemäß Punkt 1, wobei das erste Texturart ein Nasstexturat ist.
3. Lebensmittel gemäß Punkt 1 oder 2, wobei das zweite Texturat ein Trockentexturat ist.
4. Lebensmittel gemäß einem der Punkte 1 bis 3, wobei die Füllmasse mindestens 10 Gew.-%, wie beispielsweise mindestens 15 Gew.-%, mindestens 20 Gew.-%, mindestens 25 Gew.-%, mindestens 30 Gew.-% oder mindestens 35 Gew.-%, von dem ersten Texturat enthält.
5. Lebensmittel gemäß einem der Punkte 1 bis 4, wobei die Füllmasse 10 Gew.-% bis 60 Gew.-%, wie beispielsweise 10 Gew.-% bis 50 Gew.-%, 20 Gew.-% bis 45 Gew.-%, 25 Gew.-% bis 45 Gew.-%, 35 Gew.-% bis 45 Gew.-%, 30 Gew.-% bis 40 Gew.-%, 35 Gew.-% bis 40 Gew.-%, 37 Gew.-% bis 44 Gew.-%, 38 Gew.-% bis 42 Gew.-%, oder 39 Gew.-% bis 41 Gew.-% von dem ersten Texturat enthält.
6. Lebensmittel gemäß einem der Punkte 1 bis 5, wobei die Füllmasse höchstens 40 Gew.-%, wie beispielsweise höchstens 30 Gew.-%, höchstens 20 Gew.-%, höchstens 15 Gew.-%, höchstens 10 Gew.-%, höchstens 8 Gew.-%, höchstens 7 Gew.-% oder höchstens 5 Gew.-%, von dem zweiten Texturat enthält.
7. Lebensmittel gemäß einem der Punkte 1 bis 6, wobei die Füllmasse 1 Gew.-% bis 20 Gew.-%, wie beispielsweise 1 Gew.-% bis 15 Gew.-%, 1 Gew.-% bis 10 Gew.-%, 2 Gew.-% bis 8 Gew.-%, 3 Gew.-% bis 7 Gew.-%, 4 Gew.-% bis 6 Gew.-% oder 4 Gew.-% bis 5 Gew.-%, von dem zweiten Texturat enthält.
8. Lebensmittel gemäß einem der Punkte 1 bis 7, wobei das Gewichtsverhältnis von erstem Texturat zu zweitem Texturat zwischen 10:1 und 6:1, wie beispielsweise 8:1, oder auch zwischen 8,5:1 und 7,5:1 liegt.
9. Lebensmittel gemäß einem der Punkte 1 bis 8, wobei das erste und/oder das zweite Pflanzenprotein ein Hülsenfruchtprotein, Getreideprotein oder Ölsaatprotein ist.
10. Lebensmittel gemäß einem der Punkte 1 bis 9, wobei das erste und/oder das zweite Pflanzenprotein ein Hülsenfruchtprotein ist.
11. Lebensmittel gemäß einem der Punkte 1 bis 10, wobei das erste und/oder das zweite Pflanzenprotein ausgewählt ist aus der Gruppe bestehend aus Erbsenprotein, Ackerbohnenprotein, Kichererbsenprotein, Linsenprotein, Lupinenprotein, Sojaprotein, Erdnussprotein, Sesamprotein, Sonnenblumenprotein, Kürbisprotein, Rapsprotein, Weizenprotein und Kartoffelprotein.
12. Lebensmittel gemäß einem der Punkte 1 bis 11, wobei das erste und/oder das zweite Pflanzenprotein ein Erbsenprotein ist.
13. Lebensmittel gemäß einem der Punkte 1 bis 12, wobei das erste und/oder das zweite Pflanzenprotein ein Ackerbohnenprotein enthält.
14. Lebensmittel gemäß einem der Punkte 1 bis 13, wobei das erste Pflanzenprotein ein Erbsenprotein ist.
15. Lebensmittel gemäß einem der Punkte 1 bis 14, wobei das zweite Pflanzenprotein ein Erbsenprotein ist.
16. Lebensmittel gemäß einem der Punkte 1 bis 15, wobei das erste und/oder zweite Pflanzenprotein ein Pflanzenproteinkonzentrat oder - isolate ist.
17. Lebensmittel gemäß einem der Punkte 1 bis 15, wobei die Füllmasse ferner mindestens ein nicht-texturiertes Pflanzenprotein enthält.
18. Lebensmittel gemäß Punkt 17, wobei die Füllmasse höchstens 50 Gew.-%, wie beispielsweise höchstens 40 Gew.-%, höchstens 30 Gew.-%, höchstens 20 Gew.-%, höchstens 15 Gew.-%, höchstens 10 Gew.-%, höchstens 7 Gew.-% oder höchstens 5 Gew.-%, von dem nicht-texturiertes Pflanzenprotein enthält.
19. Lebensmittel gemäß Punkt 17 oder 18, wobei die Füllmasse 1 Gew.-% bis 30% Gew.-%, wie beispielsweise 1 Gew.-% bis 20% Gew.-%, 1 Gew.-% bis 10% Gew.-%, 2 Gew.-% bis 8% Gew.-%, 3 Gew.-% bis 7% Gew.-%, 4 Gew.-% bis 6% Gew.-% oder 4 Gew.-% bis 5% Gew.-%, von dem nicht-texturiertes Pflanzenprotein enthält.
20. Lebensmittel gemäß einem der Punkte 17 bis 19, wobei das nicht-texturiertes Pflanzenprotein ein Hülsenfruchtprotein, Getreideprotein oder Ölsaatenprotein ist.
21. Lebensmittel gemäß einem der Punkte 17 bis 20, wobei das wobei das nicht-texturiertes Pflanzenprotein ein Hülsenfruchtprotein ist.
22. Lebensmittel gemäß einem der Punkte 17 bis 21, wobei das nicht-texturiertes Pflanzenprotein ausgewählt ist aus der Gruppe bestehend aus Erbsenprotein, Kichererbsenprotein, Linsenprotein, Lupinenprotein, Sojaprotein, Erdnussprotein, Sesamprotein, Sonnenblumenprotein, Kürbisprotein, Rapsprotein, Weizenprotein und Kartoffelprotein.
23. Lebensmittel gemäß einem der Punkte 17 bis 22, wobei das nicht-texturiertes Pflanzenprotein ein Erbsenprotein ist.
24. Lebensmittel gemäß einem der Punkte 17 bis 23, wobei das nicht-texturiertes Pflanzenprotein ein Pflanzenproteinkonzentrat oder - isolate ist.
25. Lebensmittel gemäß einem der Punkte 1 bis 24, wobei das erste Texturat durch Nassextrusion einer Zusammensetzung enthaltend das Pflanzenprotein, Wasser und gegebenenfalls ein oder mehrere weitere Bestandteile hergestellt wurde.
26. Lebensmittel gemäß einem der Punkte 1 bis 25, wobei die Füllmasse ferner mindestens einen weiter Bestandteil ausgewählt aus der Gruppe bestehend aus Fetten, Ölen, Verdickungsmitteln, Emulgatoren, Wasser, Aromastoffen, Geschmackstoffen, Gewürzen, Salz, pH-Regulatoren, Farbstoffen, färbenden Lebensmitteln, Antioxidantien, Konservierungsmitteln und Frischhaltern enthält.
27. Lebensmittel gemäß einem der Punkte 1 bis 25, wobei die Füllmasse folgendes enthält:
   30 Gew.-% bis 50 Gew.-%, vorzugweise 35 Gew.-% bis 45 Gew.-%, von dem ersten Texturat;
   1 Gew.-% bis 10% Gew.-%, vorzugsweise 3 Gew.-% bis 7 Gew.-%, von dem zweiten Texturat;
   0,1 Gew.-% bis 5 Gew.-%, vorzugsweise 0,5 Gew.-% bis 3 Gew.-%, von einem oder mehreren (bspw. 2, 3 oder 4) Verdickungsmitteln;
   0,00 Gew.-% bis 15 Gew.-%, vorzugsweise 5 Gew.-% bis 10 Gew.-%, von einem oder mehreren (bspw. 2, 3 oder 4) Fetten und/oder Ölen;
   0,00 Gew.-% bis 5 Gew.-%, vorzugweise 0,2 Gew.-% bis 2 Gew.-%, von einem oder mehreren (bspw. 2, 3 oder 4) Aromastoffen;
   0,00 Gew.-% bis 10 Gew.-%, vorzugsweise 5 Gew.-% bis 10 Gew.-%, von einem oder mehreren (bspw. 2, 3 oder 4) Geschmacksstoffen;
   0,00 Gew.-% bis 1 Gew.-%, vorzugsweise 0,2 Gew.-% bis 0,4 Gew.-%, Salz;
   0,00Gew.-% bis 5 Gew.-%, vorzugsweise 2 Gew.-% bis 4 Gew.-% von einem oder mehreren (bspw. 2, 3 oder 4) Frischhaltern;
   0,00 Gew.-% bis 1 Gew.-%, vorzugsweise 0,1 Gew.-% bis 0,3 Gew.-%, von einem oder mehreren (bspw. 2, 3 oder 4) Farbstoffen; und
   20 Gew.-% bis 40% Gew.-%, vorzugsweise 25 Gew.-% bis 35% Gew.-%, Wasser;
   wobei die Summe der Mengen aller Bestandteile der Füllmasse 100 Gew.-% nicht übersteigt.
28. Lebensmittel gemäß einem der Punkte 1 bis 27, wobei die essbare Membran Pflanzen-, Bakterien-, Algen- und/oder Pilz-abgeleiteten Rohstoffen umfasst.
29. Lebensmittel gemäß einem der Punkte 1 bis 27, wobei die essbare Membran eine auf Pflanzen-, Bakterien-, Algen- und/oder Pilz-abgeleiteten Polysacchariden basierende essbare Membran ist.
30. Lebensmittel gemäß einem der Punkte 1 bis 27, wobei die essbare Membran ausschließlich aus Pflanzen-abgeleiteten Rohstoffen besteht.
31. Lebensmittel gemäß einem der Punkte 1 bis 26, wobei die essbare Membran eine auf Pflanzen- oder algen-abgeleiteten Polysacchariden basierende essbare Membran ist.
32. Lebensmittel gemäß einem der Punkte 1 bis 28, wobei die essbare Membran ein Alginat aufweist.
33. Lebensmittel gemäß einem der Punkte 1 bis 31, wobei die essbare Membran aus einer Zusammensetzung gefertigt ist, die 45 Gew.-% bis 60 Gew.-% pflanzliche Polysaccharide, 18 Gew.-% bis 25 Gew.-% pflanzliches Glycerin, 2 Gew.-% bis 5 Gew.-% pflanzliches Öl und 20 Gew.-% bis 25 Gew.-% Wasser umfasst.
34. Lebensmittel gemäß einem der Punkte 1 bis 32, wobei das Lebensmittel ein Wurstersatzprodukt ist.
35. Füllmasse wie in einem der Punkte 1 bis 26 definiert.
36. Verfahren zur Herstellung eines Lebensmittels gemäß einem der Punkte 1 bis 33, umfassend die folgenden Schritte:
   a) Bereitstellen eines erstes Texturats, welches ein erstes Pflanzenprotein enthält, wobei das erste Texturart durch Nassextrusion einer Zusammensetzung enthaltend das erste Pflanzenprotein, Wasser und gegebenenfalls ein oder mehrere weitere Bestandteile hergestellt wurde;
   b) gegebenenfalls Bereitstellen eines zweiten Texturats, welches ein zweites Pflanzenprotein enthält, wobei das zweite Texturat durch Trockenextrusion einer Zusammensetzung enthaltend das zweite Pflanzenprotein, Wasser und gegebenenfalls ein oder mehrere weitere Bestandteile hergestellt wurde, und/oder Bereitstellen eines nicht-texturierten Pflanzenproteins;
   c) Vermischen des ersten Texturats und gegebenenfalls zweiten Texturats und/oder nicht-texturierten Pflanzenproteins mit mindestens einem weiteren Bestandteil ausgewählt aus der Gruppe bestehend aus pflanzlichen Fetten, pflanzlichen Ölen, Verdickungsmitteln, Emulgatoren, Wasser, Aromastoffen, Geschmackstoffen, Gewürzen, Salz, pH-Regulatoren, Farbstoffen, färbenden Lebensmitteln, Antioxidantien, Konservierungsmitteln und Frischhaltern, zum Erhalt einer Füllmasse;
   d) gegebenenfalls Durchführen der in Schritt c) erhaltenen Füllmasse durch einen Kutter und/oder Füllwolf; und
   e) Füllen der in Schritt c) oder d) erhaltenen Füllmasse in eine Umhüllung aus einer essbaren Membran, welche ausschließlich aus vegetarischen oder vegan Rohstoffen besteht.
37. Verfahren nach Punkt 36, bei dem der Schritt b) umfasst:
   - Vorquellen des Trockentexturats mit Wasser.
38. Verfahren nach einem der Punkte 36 bis 36, umfassend:
   - Bereitstellen der Füllmasse in wurstförmiger Form;
   - Benetzen der Oberfläche der Füllmasse mit einer Lösung aufweisend wenigsten eines aus Natrium, Kalium, oder Clazium;
   - Führen der benetzten Füllmasse durch ein alginsäurehaltiges oder alginathaltiges Bad.

### Detaillierte Beschreibung der Erfindung

Im Prozess der Extrusion werden pflanzliche Proteine unter hohem Druck und Temperatur plastifiziert. Bei der Trockenextrusion tritt das heiße plastische Extrudat mit einer Temperatur >100°C aus dem Extruder aus und expandiert, indem ein Teil der Feuchte spontan verdampft. Durch das Aufblähen der Masse resultiert eine schwammartige, offene Struktur des Texturates. Bei der Nassextrusion wird das heiße, plastische Extrudat dagegen in einer Kühldüse unter Druck abgekühlt, wobei durch Scherkräfte in der sich zunehmend verfestigenden Masse eine geschlossene faserartige Struktur entsteht, weil es nicht zu einem Aufblähen durch Verdampfung kommt.

Nasstexturate weisen durch ihre geschlossene Faserstruktur einen besonders elastischen, fleischähnlichen Biss auf. Überraschenderweise übertragen sie diese Eigenschaft auch in fein zerkleinerter Form, wenn sie in eine Füllmasse eingearbeitet werden. Wird die weitgehend unelastische vegane/vegetarische Hülle unter Druck mit einer solchen Masse gefüllt, kommt es auch beim Erhitzen nicht zu einer nennenswerten Ablösung der Hülle von der Füllmasse.

Eine Beimischung von Trockentexturat oder nicht-texturiertem Pflanzenprotein zum Nasstexturat kann durch deren Quelleigenschaften den inneren Druck der Füllungsmasse und damit die Anhaftung der Hülle nochmals verbessern, sowie die Füllmasse glatter und weniger körnig machen. Bei einer geeigneten Mischung zwischen Trockentexturat und Nasstexturat wurde überaschender Weise zudem festgestellt, dass die körninge und porige Form des Trockentexturats ermöglicht, ein Membran innig mit der Füllmasse zu verbinden, wie dies im folgenden noch ausgeführt wird.

Basierend auf diesen überraschenden Erkenntnissen wurde die vorliegende Erfindung realisiert, welche im Folgenden ausführlicher beschrieben wird.

In einem ersten Aspekt wird erfindungsgemäß ein Lebensmittel bereitgestellt, welches a) eine Füllmasse enthaltend mindestens ein erstes Texturat, welches ein erstes Pflanzenprotein enthält, und gegebenenfalls ein zweites Texturat, welches ein zweites Pflanzenprotein enthält, und b) eine Umhüllung aus einer essbaren Membran, welche ausschließlich aus vegetarischen oder vegan Rohstoffen besteht, umfasst.

Bei dem erfindungsgemäßen Lebensmittel handelt es sich im Allgemeinen um ein veganes oder vegetarisches Ersatzprodukt, vorzugweise veganes oder vegetarisches Wurstersatzprodukt.

Als vegan werden Lebensmittel bezeichnet, die keine Erzeugnisse tierischen Ursprunges sind und die auf allen Produktionsstufen keine Zutaten, einschließlich Enzyme, Aromen oder Träger, keine Verarbeitungsstoffe oder andere Stoffe verwenden, die tierischen Ursprungs sind, in verarbeiteter oder unverarbeiteter Form zugesetzt oder verwendet werden.

Vegetarische Lebensmittel sind demgegenüber Lebensmittel, bei deren Produktion in der Regel Milch, Kolostrum, Farmgeflügeleier, Bienenhonig oder -Wachs oder Bestandteile daraus verwendet werden. Fleisch, Innereien oder Fisch bzw. deren Bestandteile daraus sind in vegetarischen Produkten nicht enthalten.

Das erste Texturat ist vorzugsweise ein Nasstexturat.

Unter einem Nasstexturat wird im Allgemeinen ein Produkt verstanden, welches mittels Nasstexturierung hergestellt wurde. Bei geeigneter Prozessführung zeichnen sich Nasstexturate durch eine geschlossene faserartige, muskelfleischähnliche Textur aus. Wie oben beschrieben handelt es sich bei der Nasstexturierung um ein Kochextrusionsprozess, bei dem durch Verwendung einer gekühlten Düse eine Expansion der protein- und wasserreichen Matrix am Düsenaustritt verhindert wird. Nasstexturate haben in der Regel einen Wassergehalt von zwischen 50-80 Gew.-% Wasser.

Entsprechend kann das erste Texturat ein durch Nassextrusion einer Zusammensetzung enthaltend das erste Pflanzenprotein, Wasser und gegebenenfalls ein oder mehrere weitere Bestandteile hergestelltes Nasstexturat sein.

Gemäß einiger Ausführungsformen enthält das Nasstexturat 50-80 Gew.-% Wasser, wie beispielsweise 50-70 Gew.-% Wasser, vorzugweise 55-65 Gew.-% Wasser.

Die Füllmasse des erfindungsgemäßen Lebensmittels enthält in der Regel mindestens 10 Gew.-% von dem ersten Texturat, d.h. insbesondere dem Nasstexturat. Gemäß einiger Ausführungsformen enthält die Füllmasse mindestens 15 Gew.-% von dem ersten Texturat. Gemäß einiger Ausführungsformen enthält die Füllmasse mindestens 20 Gew.-% von dem ersten Texturat. Gemäß einiger Ausführungsformen enthält die Füllmasse mindestens 30 Gew.-% von dem ersten Texturat. Gemäß einiger Ausführungsformen enthält die Füllmasse mindestens 35 Gew.-% von dem ersten Texturat.

Die Füllmasse kann beispielsweise 10 Gew.-% bis 60 Gew.-% von dem ersten Texturat enthält. Gemäß einiger Ausführungsformen enthält die Füllmasse 10 Gew.-% bis 50 Gew.-% von dem ersten Texturat. Gemäß einiger Ausführungsformen enthält die Füllmasse 20 Gew.-% bis 45 Gew.-% von dem ersten Texturat. Gemäß einiger Ausführungsformen enthält die Füllmasse 25 Gew.-% bis 45 Gew.-% von dem ersten Texturat.

Als besonders zweckmäßig hat sich ein Bereich von 35 Gew.-% bis 45 Gew.-% von dem ersten Texturat herausgestellt, da es dem Lebensmittel eine optimale Elastizität und Saftigkeit verleiht. Insbesondere wurde festgestellt, dass dieser Bereich an Nasstexturat am ehesten dem Biss einer konventionellen Bratwurst entspricht. Entsprechend enthält die Füllmasse in einigen Ausführungsformen 35 Gew.-% bis 45 Gew.-% von dem ersten Texturat. Gemäß einiger Ausführungsformen enthält die Füllmasse 35 Gew.-% bis 43 Gew.-% von dem ersten Texturat. Gemäß einiger Ausführungsformen enthält die Füllmasse 37 Gew.-% bis 42 Gew.-% von dem ersten Texturat. Gemäß einiger Ausführungsformen enthält die Füllmasse 37 Gew.-% bis 41 Gew.-% von dem ersten Texturat. Gemäß einiger Ausführungsformen enthält die Füllmasse 38,5 Gew.-% bis 41 Gew.-% von dem ersten Texturat, beispielsweise 38,81 Gew.-%, oder auch 40,21 Gew.-%oder auch 39,65 Gew.-%.

Das zweite Texturat ist vorzugsweise ein Trockentexturat.

Unter einem Trockentexturat wird im Allgemeinen ein Produkt verstanden, welches mittels Trockentexturierung hergestellt wurde. Bei geeigneter Prozessführung zeichnen sich Trockentexturate durch eine schwammartige oder faserige, offene Struktur aus. Trockentexturate haben in der Regel einen Wassergehalt von höchstens 20 Gew.-% Wasser. Dadurch können sie bei Zugabe mit Wasser aufquellen, so dass sich einei leichte und fasrige Struktur ergibt. Bei der Herstellung der Bratwurst nach dem vorgeschlagenen Prinzip stabilisiert das Trockentexturat die Füllmasse und bewirkt die Körnigkeit der Bratwurst.

Gemäß einiger Ausführungsformen enthält das Trockentexturat höchstens 20 Gew.-% Wasser, wie beispielsweise höchstens 10 Gew.-% Wasser oder höchstens 7 Gew.-% Wasser.Gemäß einiger Ausführungsformen enthält das Trockentexturat von 5 Gew.-% bis 12%Gew.-% Wasser.

Die Füllmasse des erfindungsgemäßen Lebensmittels enthält in der Regel höchstens 40 Gew.-% von dem zweiten Texturat. Dieses ist in einigen Ausfühugen das oben beschriebene Trockentexturat. Gemäß einiger Ausführungsformen enthält die Füllmasse höchstens 30 Gew.-% von dem zweiten Texturat. Gemäß einiger Ausführungsformen enthält die Füllmasse höchstens 20 Gew.-%von dem zweiten Texturat. Gemäß einiger Ausführungsformen enthält die Füllmasse höchstens 15 Gew.-% von dem zweiten Texturat. Gemäß einiger Ausführungsformen enthält die Füllmasse höchstens 12 Gew.-%von dem zweiten Texturat. Gemäß einiger Ausführungsformen enthält die Füllmasse höchstens 10 Gew.-% von dem zweiten Texturat. Gemäß einiger Ausführungsformen enthält die Füllmasse höchstens 7 Gew.-%von dem zweiten Texturat. Gemäß einiger Ausführungsformen enthält die Füllmasse höchstens 5 Gew.-% von dem zweiten Texturat.

Die Füllmasse kann beispielsweise 1 Gew.-% bis 20 Gew.-% von dem zweiten Texturat enthalten. Gemäß einiger Ausführungsformen enthält die Füllmasse 1 Gew.-% bis 15 Gew.-%von dem zweiten Texturat. Gemäß einiger Ausführungsformen enthält die Füllmasse 3 Gew.-% bis 10 Gew.-% von dem zweiten Texturat. Gemäß einiger Ausführungsformen enthält die Füllmasse 4 Gew.-% bis 8 Gew.-% von dem zweiten Texturat. Gemäß einiger Ausführungsformen enthält die Füllmasse 3 Gew.-% bis 7 Gew.-% von dem zweiten Texturat. Gemäß einiger Ausführungsformen enthält die Füllmasse 4 Gew.-% bis 6 Gew.-% von dem zweiten Texturat. Gemäß einiger Ausführungsformen enthält die Füllmasse 4,5 Gew.-% bis 5,5 Gew.-% von dem zweiten Texturat.

Das Gewichtsverhältnis von erstem Texturat zu zweitem Texturat kann beispielsweise zwischen 10:1 und 6:1 liegt. Gemäß einiger Ausführungsformen liegt das Gewichtsverhältnis von erstem Texturat zu zweitem Texturat zwischen 9:1 und 7:1. Gemäß einiger Ausführungsformen ist das Gewichtsverhältnis von erstem Texturat zu zweitem Texturat 8,5:1 bis 7,5:1 und insbesdonere in etwa 8:1.

Alternativ oder zusätzlich zum zweiten Texturat kann die Füllmasse mindestens ein nicht-texturiertes Pflanzenprotein enthalten. Ein nicht-texturiertes Pflanzenprotein ist ein pulverförmiges Pflanzenprotein welches keinem Texturierungsprozess unterzogen wurde.

Die Füllmasse des erfindungsgemäßen Lebensmittels enthält in der Regel höchstens 50 Gew.-% von dem nicht-texturierten Pflanzenprotein. Gemäß einiger Ausführungsformen enthält die Füllmasse höchstens 40 Gew.-% von dem nicht-texturierten Pflanzenprotein. Gemäß einiger Ausführungsformen enthält die Füllmasse höchstens 30 Gew.-% von dem nicht-texturierten Pflanzenprotein. Gemäß einiger Ausführungsformen enthält die Füllmasse höchstens 20 Gew.-% von dem nicht-texturierten Pflanzenprotein. Gemäß einiger Ausführungsformen enthält die Füllmasse höchstens 15 Gew.-% von dem nicht-texturierten Pflanzenprotein. Gemäß einiger Ausführungsformen enthält die Füllmasse höchstens 10 Gew.-% von dem nicht-texturierten Pflanzenprotein. Gemäß einiger Ausführungsformen enthält die Füllmasse höchstens 7 Gew.-% von dem nicht-texturierten Pflanzenprotein. Gemäß einiger Ausführungsformen enthält die Füllmasse höchstens 5 Gew.-% von dem nicht-texturierten Pflanzenprotein.

Die Füllmasse kann beispielsweise 1 Gew.-% bis 30 Gew.-% von dem nicht-texturierten Pflanzenprotein enthalten. Gemäß einiger Ausführungsformen enthält die Füllmasse 1 Gew.-% bis 20 Gew.-%von dem nicht-texturierten Pflanzenprotein. Gemäß einiger Ausführungsformen enthält die Füllmasse 1 Gew.-% bis 10 Gew.-% von dem nicht-texturierten Pflanzenprotein. Gemäß einiger Ausführungsformen enthält die Füllmasse 2 Gew.-% bis 8 Gew.-% von dem nicht-texturierten Pflanzenprotein. Gemäß einiger Ausführungsformen enthält die Füllmasse 3 Gew.-% bis 7 Gew.-% von dem nicht-texturierten Pflanzenprotein. Gemäß einiger Ausführungsformen enthält die Füllmasse 4 Gew.-% bis 6 Gew.-% von dem nicht-texturierten Pflanzenprotein. Gemäß einiger Ausführungsformen enthält die Füllmasse 4 Gew.-% bis 5 Gew.-% von dem nicht-texturierten Pflanzenprotein.

Im Allgemeinen sollte die Summe der Mengen des zweiten Texturates und des nicht-texturierten Pflanzenproteins, falls beide in der Füllmasse enthalten sind, die oben genannten Höchstwerte nicht übersteigen, d.h. die Summe der Mengen des zweiten Texturats und des nicht-texturierten Pflanzenproteins, falls beide in der Füllmasse enthalten sind, sollte nicht 50 Gew.-% übersteigen usw.

Die Pflanzenproteine, die erfindungsgemäß verwendet werden, können von jeder geeigneten Pflanze abstammen, einschließlich, jedoch nicht beschränkt darauf, Hülsenfrüchte, Getreide und Ölsaaten. Die Pflanzenproteine, die erfindungsgemäß verwendet werden, können gleich oder verschieden sein.

Gemäß einiger Ausführungsformen ist das erste Pflanzenprotein ein Hülsenfruchtprotein, Getreideprotein oder Ölsaatprotein. Gemäß einiger Ausführungsformen ist das erste Pflanzenprotein ein Hülsenfruchtprotein. Gemäß einiger Ausführungsformen ist das erste Pflanzenprotein ein Hülsenfruchtprotein oder Ölsaatprotein. Gemäß einiger Ausführungsformen ist das erste Pflanzenprotein ein Hülsenfruchtprotein. Gemäß einiger Ausführungsformen ist das erste Pflanzenprotein ein Getreideprotein. Gemäß einiger Ausführungsformen ist das erste Pflanzenprotein ein Ölsaatprotein.

Gemäß einiger Ausführungsformen ist das erste Pflanzenprotein ausgewählt aus der Gruppe bestehend aus Erbsenprotein, Kichererbsenprotein, Linsenprotein, Lupinenprotein, Sojaprotein, Erdnussprotein, Sesamprotein, Sonnenblumenprotein, Kürbisprotein, Rapsprotein, Weizenprotein und Kartoffelprotein.

Als besonders geeignet für das Nasstexturat hat sich Erbsenprotein, Ackerbohnenprotein oder Kombinationen hiervon erwiesen.

Gemäß einiger Ausführungsformen ist das zweite Pflanzenprotein ein Hülsenfruchtprotein, Getreideprotein oder Ölsaatprotein. Gemäß einiger Ausführungsformen ist das zweite Pflanzenprotein ein Hülsenfruchtprotein. Gemäß einiger Ausführungsformen ist das zweite Pflanzenprotein ein Hülsenfruchtprotein oder Ölsaatprotein. Gemäß einiger Ausführungsformen ist das zweite Pflanzenprotein ein Hülsenfruchtprotein. Gemäß einiger Ausführungsformen ist das zweite Pflanzenprotein ein Getreideprotein. Gemäß einiger Ausführungsformen ist das zweite Pflanzenprotein ein Ölsaatprotein.

Gemäß einiger Ausführungsformen ist das zweite Pflanzenprotein ausgewählt aus der Gruppe bestehend aus Erbsenprotein, Ackerbohnenprotein, Kichererbsenprotein, Linsenprotein, Lupinenprotein, Sojaprotein, Erdnussprotein, Sesamprotein, Sonnenblumenprotein, Kürbisprotein, Rapsprotein, Weizenprotein und Kartoffelprotein.

Gemäß einiger bevorzugter Ausführungsformen für zweite Pflanzenprotein und damit das Trockentexturat hat sich Erbsenprotein, Ackerbohnenprotein oder Kombinationen hiervon erwiesen

Gemäß einiger Ausführungsformen ist das nicht-texturierte Pflanzenprotein ein Hülsenfruchtprotein, Getreideprotein oder Ölsaatprotein. Gemäß einiger Ausführungsformen ist das nicht-texturierte Pflanzenprotein ein Hülsenfruchtprotein. Gemäß einiger Ausführungsformen ist das nicht-texturierte Pflanzenprotein ein Hülsenfruchtprotein oder Ölsaatprotein. Gemäß einiger Ausführungsformen ist das nicht-texturierte Pflanzenprotein ein Hülsenfruchtprotein. Gemäß einiger Ausführungsformen ist das nicht-texturierte Pflanzenprotein ein Getreideprotein. Gemäß einiger Ausführungsformen ist das nicht-texturierte Pflanzenprotein ein Ölsaatprotein.

Gemäß einiger Ausführungsformen ist das nicht-texturierte Pflanzenprotein ausgewählt aus der Gruppe bestehend aus Erbsenprotein, Kichererbsenprotein, Linsenprotein, Lupinenprotein, Sojaprotein, Erdnussprotein, Sesamprotein, Sonnenblumenprotein, Kürbisprotein, Rapsprotein, Weizenprotein und Kartoffelprotein.

Gemäß einiger bevorzugter Ausführungsformen ist das nicht-texturierte Pflanzenprotein ein Erbsenprotein.

Die Pflanzenproteine, die erfindungsgemäß verwendet werden, können in der Form eines Pflanzenproteinkonzentrats oder -isolats sein. Dieses kann auf nassem oder trockenem Wege gewonnen worden sein.

Gemäß einiger Ausführungsformen ist das erste Pflanzenprotein ein Pflanzenproteinkonzentrat. Gemäß einiger Ausführungsformen ist das erste Pflanzenprotein ein Pflanzenproteinisolat. Gemäß einiger Ausführungsformen ist das zweite Pflanzenprotein ein Pflanzenproteinkonzentrat. Gemäß einiger Ausführungsformen ist das zweite Pflanzenprotein ein Pflanzenproteinisolat. Gemäß einiger Ausführungsformen ist das nicht-texturierte Pflanzenprotein ein Pflanzenproteinkonzentrat. Gemäß einiger Ausführungsformen ist das nicht-texturierte Pflanzenprotein ein Pflanzenproteinisolat.

Die Füllmasse des erfindungsgemäßen Lebensmittels kann verschiedene andere Bestandteile umfassen, insbesondere solche wie sie üblicherweise in der Lebensmittelindustrie zum Erzeugen von veganen oder vegetarischen Lebensmitteln eingesetzt werden.

Entsprechend kann die Füllmasse mindestens einen weiteren Bestandteil ausgewählt aus der Gruppe bestehend aus Fetten, Ölen, Verdickungsmitteln, Emulgatoren, Wasser, Aromastoffen, Geschmackstoffen, Gewürzen, Salz, pH-Regulatoren, Farbstoffen, färbenden Lebensmitteln, Antioxidantien, Konservierungsmitteln und Frischhaltern enthalten.

Nicht-einschränkend Bespiele von Fetten sind Kokosfett und Fraktionen davon, Palmfett und Fraktionen davon, Palmkernfett und Fraktionen davon, Shea-Butter, Sal-Fett, Kakaobutter, gehärtete und teilgehärtete Pflanzenöle, Rindertalg oder Schweineschmalz.

Nicht-einschränkend Bespiele von Ölen sind Rapsöl, Sonnenblumenöl, Distelöl, Sojaöl, Olivenöl, Maiskeimöl, Baumwollsaatenöl, Kokosöl, Palmöl, Palmkernöl, Sesamöl, Erdnussöl, Walnussöl oder Mandelöl.

Nicht-einschränkend Bespiele von Verdickungsmitteln sind Carragen, Johannesbrotkernmehl, Guargum, modifizierte Cellulose (bspw. Methylcellulose), Quellstärken, modifizierte Stärken, Pektin, Pflanzenfasern, Konjak, Tragant, Agar Agar, Xanthan, Gellan, Gummi Arabicum oder Alginate.

Nicht-einschränkend Bespiele von Emulgatoren sind Lecithin, Sorbitane (Ester von Sorbit mit Speisefettsäuren), Milchsäureester, Weinsäureester, Essigsäureester, Mono-, Diglyceride von Speisefettsäuren, Polyglycerinester, Propylengycolester oder Polysorbate.

Nicht-einschränkend Bespiele von Aromastoffen sind natürliche Fleischaromen, Fleischaromen, Hefeextrakte, Reaktionsaromen/ Maillardaromen, Maillardaromen, natürliche Raucharomen, Raucharomen, natürliche Grillaromen, Grillaromen oder Geschmacksmodulatoren.

Nicht-einschränkend Bespiele von Geschmackstoffen sind Gewürze, Kräuter, Pflanzenextrakte, Süßungsmittel, Genußsäuren, Glutamate, Ribonucleotide, Inosinphosphate, Guanosinphosphate, Geschmacksverstärker, Hefeextrakte oder Bernsteinsäure.

Nicht-einschränkend Bespiele von pH-Regulatoren sind Genußsäuren und deren Salze, Gluconsäure/Gluconate, Gluconolactone, Essigsäure/ Acetate, Milchsäure/Lactate, Phosphorsäure/Phosphate oder säuernde Pflanzensäfte und Extrakte.

Nicht-einschränkend Bespiele von Farbstoffen sind färbende Lebensmittel, färbende Gewürze, natürliche Farbstoffe, synthetische Lebensmittelfarbstoffe, Karamelle, Kulöre oder Malzextrakte.

Nicht-einschränkend Bespiele von Antioxidantien sind Ascorbinsäure, Fettsäureester von Ascorbinsäure, Rosmarinextrakte, Tocopherol, Butylhydroxytoluol, Butylhydroxyansiol oder Gallate.

Nicht-einschränkend Bespiele von Konservierungsmitteln und Frischhaltern sind Sorbinsäure/Sorbate, Essigsäure/ Acetate, Propionsäure/Propionate, Buttersäure/Butyrate, Milchsäure/Lactate, säuernde Pflanzensäfte oder Benzoesäure/ Benzoate.

Solche anderen Bestandteile können aus einer oder mehreren nicht tierischen Quellen oder aus einer oder mehreren modifizierten nicht tierischen Quellen stammen oder hergestellt sein. Zum Beispiel können Fette und Öle pflanzlichen Ursprungs sein.

Die Beimischung von modifizierter Cellulose und/oder anderen Verdickungsmitteln, Fetten/Ölen und weiteren Rezepturbestandteile ermöglicht die Herstellung der gewünschten Endkonsistenz des veganen/vegetarischen Lebensmittels.

Gemäß einiger Ausführungsformen enthält die Füllmasse des erfindungsgemäßen Lebensmittels folgende Bestandteile:
30 Gew.-% bis 50 Gew.-%, vorzugweise 35 Gew.-% bis 45 Gew.-%, von dem ersten Texturat;
1 Gew.-% bis 10% Gew.-%, vorzugsweise 3 Gew.-% bis 7 Gew.-%, von dem zweiten Texturat;
0,1 Gew.-% bis 5 Gew.-%, vorzugsweise 0,5 Gew.-% bis 3 Gew.-%, von einem oder mehreren (bspw. 2, 3 oder 4) Verdickungsmitteln;
0,00 Gew.-% bis 15 Gew.-%, vorzugsweise 5 Gew.-% bis 10 Gew.-%, von einem oder mehreren (bspw. 2, 3 oder 4) Fetten und/oder Ölen;
0,00 Gew.-% bis 5 Gew.-%, vorzugweise 0,2 Gew.-% bis 2 Gew.-%, von einem oder mehreren (bspw. 2, 3 oder 4) Aromastoffen;
0,00 Gew.-% bis 10 Gew.-%, vorzugsweise 5 Gew.-% bis 10 Gew.-%, von einem oder mehreren (bspw. 2, 3 oder 4) Geschmacksstoffen;
0,00 Gew.-% bis 1 Gew.-%, vorzugsweise 0,2 Gew.-% bis 0,4 Gew.-%, Salz;
0,00 Gew.-% bis 5 Gew.-%, vorzugsweise 2 Gew.-% bis 4 Gew.-% von einem oder mehreren (bspw. 2, 3 oder 4) Frischhaltern;
0,00 Gew.-% bis 1 Gew.-%, vorzugsweise 0,1 Gew.-% bis 0,3 Gew.-%, von einem oder mehreren (bspw. 2, 3 oder 4) Farbstoffen; und
20 Gew.-% bis 40% Gew.-%, vorzugsweise 25 Gew.-% bis 35% Gew.-%, Wasser;
wobei die Summe der Mengen aller Bestandteile der Füllmasse 100 Gew.-% nicht übersteigt.

Gemäß einiger Ausführungsformen enthält die Füllmasse des erfindungsgemäßen Lebensmittels die Bestandteile wie im untenstehenden Ausführungsbeispiel beschrieben.

Wie oben beschrieben umfasst das erfindungsgemäße Lebensmittel eine Umhüllung aus einer essbaren Membran, welche ausschließlich aus vegetarischen oder vegan Rohstoffen besteht. Die Membran kann daher Rohstoffe umfassen, bzw aus diesen bestehen, die aus Pflanzen, Algen, Bakterien und/oder Pilzen gewonnen wurden. Gemäß einiger Ausführungsformen besteht die Membran aus Pflanzen-abgeleiteten Rohstoffen.

Als nützlich haben sich essbare Membranen erwiesen, welche auf pflanzlichen oder biochemisch fermentative hergestellten Polysacchariden basieren. Entsprechend basiert die essbare Membran gemäß einiger Ausführungsformen auf Pflanzen-, Algen, Bakterien- und/oder Pilz-abgeleiteten Polysacchariden. Gemäß einiger Ausführungsformen basiert die essbare Membran auf pflanzlichen Polysacchariden.

Ein Beispiel einer auf pflanzlichen Polysacchariden basierenden essbaren Membran ist die Umhüllung welche von der Firma Viscofan, Navarra, Spanien, unter dem Namen Viscofan Veggie^{®} vertrieben wird. Als ein anderes Beispiel hat sich eine Membran basierend auf Alginaten erwiesen. Bei diesen Membranen, die in flüssiger Form auf die als Wurst oder Wurststrang vorliegende Füllmasse aufgebracht wird, ist überraschend festgestellt worden, dass das flüssige Membranmaterial in die offenporige Struktur des Trockentexturats eindringt und so zu einer besonders innigen Verbindung mit der Füllmasse führt. Damit wird nicht nur ein knackiger, dem Orgiginal entsprechender Biss erzeugt, sondern es wird auch ein Aufreißen der Membran reduziert. Zudem läßt sich die Membran nicht mehr von der Füllmasse trennen, so dass die wurst auch während des Bratens ihre Form behält.

Gemäß einiger Ausführungsformen ist die essbare Membran aus einer Zusammensetzung gefertigt, die 45 Gew.-% bis 60 Gew.-% pflanzliche Polysaccharide, 18 Gew.-% bis 25 Gew.-% pflanzliches Glycerin, 2 Gew.-% bis 5 Gew.-% pflanzliches Öl und 20 Gew.-% bis 25 Gew.-% Wasser umfasst, wobei die Summe der Mengen aller Bestandteile der Membran 100 Gew.-% nicht übersteigt.

Gemäß einigen weiteren Ausführungen umfasst die Membran ein Alginat, ein Salz der Alginsäure, insbesondere Natrium, Klaium oder Calziumalginat.

In einem weiteren Aspekt wird erfindungsgemäß eine Füllmasse bereitgestellt, wie sie hier beschrieben wird.

In einem weiteren Aspekt wird ein Verfahren zur Herstellung eines erfindungsgemäßen Lebensmittels bereitgestellt, umfassend die folgenden Schritte:
a) Bereitstellen eines erstes Texturats, welches ein erstes Pflanzenprotein enthält, wobei das erste Texturart durch Nassextrusion einer Zusammensetzung enthaltend das erste Pflanzenprotein, Wasser und gegebenenfalls ein oder mehrere weitere Bestandteile hergestellt wurde;
b) gegebenenfalls Bereitstellen eines zweiten Texturats, welches ein zweites Pflanzenprotein enthält, wobei das zweite Texturat durch Trockenextrusion einer Zusammensetzung enthaltend das zweite Pflanzenprotein, Wasser und gegebenenfalls ein oder mehrere weitere Bestandteile hergestellt wurde, und/oder Bereitstellen eines nicht-texturierten Pflanzenproteins;
c) Vermischen des ersten Texturats und gegebenenfalls zweiten Texturats und/oder nicht-texturierten Pflanzenproteins mit mindestens einem weiteren Bestandteil ausgewählt aus der Gruppe bestehend aus pflanzlichen Fetten, pflanzlichen Ölen, Verdickungsmitteln, Emulgatoren, Wasser, Aromastoffen, Geschmackstoffen, Gewürzen, Salz, pH-Regulatoren, Farbstoffen, färbenden Lebensmitteln, Antioxidantien, Konservierungsmitteln und Frischhaltern, zum Erhalt einer Füllmasse;
d) gegebenenfalls Durchführen der in Schritt c) erhaltenen Füllmasse durch einen Kutter und/oder Füllwolf; und
e) Füllen der in Schritt c) oder d) erhaltenen Füllmasse in eine Umhüllung aus einer essbaren Membran, welche ausschließlich aus vegetarischen oder vegan Rohstoffen besteht.

Der oder die bei der Herstellung des ersten und/oder zweiten Texturats verwendeten weiteren Bestandteile, falls vorhanden, sind in der Regel solche wie sie üblicherweise in der Lebensmittelindustrie eingesetzt werden, insbesondere solche ausgewählt aus der Gruppe bestehend aus Fetten, Ölen, Verdickungsmitteln, Emulgatoren, Aromastoffen, Geschmackstoffen, Gewürzen, Salz, pH-Regulatoren, Farbstoffen, färbenden Lebensmitteln, Antioxidantien, Konservierungsmitteln und Frischhaltern. Für die Füllmasse wird zudem auch noch Wasser hinzugegeben, und zwar in einigen Ausführungen zwischen 25 Gew-% und 35-Gew%. Die angegebene Wassermenge kann zum Teil auch für den weiter unten beschriebenen Aspekt des Vorquellens des Trockentexturats verwendet werden.

Zum Erhalt einer feineren Konsistenz der Füllmasse, kann diese nach dem Vermischen und vor der Befüllung in die Umhüllung durch einen Kutter und/oder Füllwolf geführt werden. Insofern bei der Vermischung gemäß Schritt c) bereits ein Kutter verwendet wird, kann auf dessen Einsatz im darauf folgenden optionalen Schritt d) verzichtet werden, wodurch die Füllmasse lediglich durch einen Füllwolf geführt wird um eine besonders feine Konsistenz zu erhalten.

Weiterhin is vorgesehen, das Nasstexturat vor dem Mischen leicht anzuquellen, damit es die gewünschte körnige und fasrige Struktur erreicht. Nach dem Mischen und dem Bereitstellen der fertigen Füllmasse ist in einigen Aspekten vorgesehen, die wurstförmige Füllmasse durch ein Calzium, Kalium oder natriumhaltiges Bad zu ziehen, bzw dessen Oberfläche damit zu benetzen. Anschließend wird die so mit den genannten Elementen versehene Oberfläche durch ein alginsäurehaltiges oder alginathaltiges Bad gezogen. die Säure dringt in die offenporige Struktur ein und verbindet sich mit dem vorher aufgebrachten Natrium, Kalium oder Calzium, so dass eine Hülle entsteht.

Ferner wird es den Fachleuten klar sein, dass das oben beschriebene Verfahren entweder als diskontinuierliches oder kontinuierliches Verfahren ausgebildet werden kann.

Das erfindungsgemäße Lebensmittel kann dem Endverbraucher roh aber auch vorgegart, gekühlt oder tiefgefroren angeboten werden und wird durch Braten, Grillen, Frittieren oder Zubereitung im Ofen oder Mikrowelle verzehrfertig gemacht.

### Bestimmte Definitionen

Zum Zwecke dieser Anmeldung umfasst der Begriff "Pflanzenprotein" ein Pflanzenproteingemisch. Ein Pflanzenproteinisolat ist ein Gemisch aus einem Pflanzenprotein, bei dem der Gehalt des Proteingemisches im Bereich über 80 Gew.-%, beispielsweise im Bereich von 82 Gew.-% bis 97 Gew.-%, wie 85 Gew.-% bis 95 Gew.-%, liegt. Bei einem Pflanzenproteinkonzentrat liegt der Gehalt des Proteingemisches im Bereich von 40 Gew.-% bis 80 Gew.-%; beispielsweise 55 Gew.-% bis 70 Gew.-%. Die anderen Bestandteile können aus dem Bereich der Fette, Zucker einschl. Stärke, Cellulose und Wasser stammen. Sofern nicht anders genannt umfasst ein "Pflanzenprotein" ein Pflanzenproteingemisch, andernfalls wird von einem "einzelnen Pflanzenprotein" gesprochen.

In entsprechender Weise ist ein "Erbsenprotein" oder ein Pflanzenprotein auf Erbsenbasis ein Proteingemisch, welches im wesentlichen Erbse, Erbsenbestandteile oder der Erbsenpflanze umfasst und entsprechend aufbereitet wurde. In geringem Maße können auch Proteine vorhanden sein, die aus anderen Pflanzen stammen, diese sind, sofern nicht anders angegeben, dem Verarbeitungsprozess geschuldet. Entsprechend ist ein Hülsenfruchtprotein ein Protein, welches aus Hülsenfrüchten gewonnen wurde.

Wenn hier eine numerische Grenze oder ein numerischer Bereich angegeben ist, sind die Endpunkte enthalten. Außerdem sind alle Werte und Unterbereiche innerhalb einer numerischen Grenze oder eines Bereichs speziell eingeschlossen, als ob sie explizit ausgeschrieben wurden.

Nachdem diese Erfindung allgemein beschrieben wurde, kann ein weiteres Verständnis unter Bezugnahme auf das nachfolgende spezifische Ausführungsbeispiel erhalten werden, welches nur zur Veranschaulichung dient und nicht einschränkend gewertet werden soll, sofern nichts anderweitig angegeben wird.

### Ausführungsbeispiel

**Zusammensetzung des Endprodukts**

| Bestandteil | **Gewicht in %** | **Funktion** |
|---|---|---|
| Wasser | **25-35** | **Wasser** |
| Erbsenproteinisolat enthaltendes Nasstexturat | **35-45** | **Nasstexturat** |
| Erbsenproteinisolat enthaltendes Trockentexturat | **4-6** | **Trockentexturat** |
| Methylcellulose | **1-3** | **Verdickungsmittel** |
| Citrusfaser | **0,5-1** | **Verdickungsmittel** |
| Pflanzenöl | **3-7** | **Fett/Öl** |
| Pflanzenfett | **3-7** | **Fett/Öl** |
| Hefeextrakt | **0,1-0,5** | **Aroma** |
| Fleischaroma A | **0,1-0,5** | **Aroma** |
| Fleischaroma B | **0,1-0,5** | **Aroma** |
| Fleischaroma C | **1-2** | **Aroma** |
| Zwiebelwürfel gedünstet | **6,5-8,5** | **Geschmack** |
| Speisesalz | **0,1-0,5** | **Geschmack** |
| Apfelessig 10% Säure | **0,2-0,6** | **Frischhalter** |
| Gepufferte Essigsäure | **2-4** | **Frischhalter** |
| Lebensmittelfarbe | **0,1-0,3** | **Färbung** |
| Viscofan Veggie | | **Hülle** |

| | | |
|---|---|---|
| * wobei die Summe der Mengen aller Bestandteile der Füllmasse 100 Gew.-% nicht übersteigt. | | |

In einigen Aspekten beträgt die Menge an Nasstexturat in der Füllmenge zwischen 37 Gew-% und 43 Gew-%, Menge an Nasstexturat liegt im Bereich von 5 Gew-%. Zudem ist der füllmasse Wasser in etwa mit 28 Gew-% bis 32 Gew-% zugegeben.

Alle pulverförmigen Rezepturbestandteile, sofern in der Herstellung von Nass- und/oder Trockentexturat verwendet, werden trocken vorgemischt. Das benötigte Wasser wird mit den anderen flüssigen Rezepturbestandteilen (sofern verwendet) vermischt.

Die Vormischung wird dann über eine Dosierschnecke kontinuierlich in den Zuführbereich des Extruders dosiert. Hinter der Pulverzuführung erfolgt die Flüssigkeitsdosierung über eine Dosierpumpe. Im Doppelschneckenextruder baut sich in Abhängigkeit von Schneckengeometrie und dissipierter mechanischer Antriebsenergie ein stetig zunehmender Druck und- Temperaturgradient auf, der im letzten Teil des Extruders, der "Plastifizierungszone" den atmosphärischen Kochpunkt der Mischung überschreitet.

Entlässt man das plastifizierte, heiße Gemisch ohne vorherige Kühlung über eine Düse in den Atmosphärendruck, so kommt es zu einer spontanen Expansion durch freiwerdenden Wasserdampf. Durch abschließendes Nachtrocknen erhält man das "Trockentexturat". Kühlt man das plastifizierte, heiße Gemisch in einer dem Extruder nachgeschalteten Kühldüse bis auf <100°C, so kommt es zur Ausbildung einer geschlossenen, faserigen Struktur, dem "Nasstexturat".

Das Nasstexturat wird in einem Chargenmischer mit den übrigen Rezepturbestandteilen vermengt. Dabei kommt das Trockentexturat im abschließenden Schritt dazu, nachdem die übrigen Rezepturbestandteile sich ausreichend homogen vermischt haben. Die so erzeugte Füllmasse wird mit einer kontinuierlichen automatisierten Wurstfüllmaschine in eine vegane Wursthülle gepresst und segmentweise zur gewünschten Wurstlänge abgedreht und geschnitten.

## Patentansprüche

1. Wurstersatzprodukt, insbesodnere zum Braten oder Grillen umfassend a) eine Füllmasse enthaltend mindestens ein Nasstexturat, welches ein erstes Erbsenprotein enthält, und ein Trockentexturat, welches ein zweites Erbsenprotein enthält, wobei die Menge an Trockentexturat in der Füllmasse weniger als ein Drittel der Menge an Nasstexturat in der Füllmasse beträgt und b) eine Umhüllung aus einer essbaren Membran, welche ausschließlich aus vegetarischen oder vegan Rohstoffen besteht.

2. Lebensmittel gemäß Anspruch 1, wobei die Füllmasse wenigstens eine der folgenden Mengen umfasst:
- mindestens 15 Gew.-% von dem Nasstexturat;
- 15 Gew.-% bis 60 Gew.-%, vorzugweise 35 Gew.-% bis 45 Gew.-% von dem Nasstexturat;
- höchstens 30 Gew.-% von dem Trockentexturat;
- 1 Gew.-% bis 30% Gew.-%, vorzugsweise 4 Gew.-% bis 6 Gew.-%, von dem Trockentexturat;

3. Lebensmittel gemäß einem der Ansprüche 1 bis 2, wobei das erste und/oder zweite Erbsenprotein ein Erbsenproteinkonzentrat oder - isolat ist.

4. Lebensmittel gemäß einem der Ansprüche 1 bis 3, wobei das erste und/oder zweite Erbsenprotein eine Mischung aus einem Erbsenproteinkonzentrat oder -isolat und einem Ackerbohnenkonzentrat oder -isolat ist.

5. Lebensmittel gemäß einem der Ansprüche 1 bis 4, wobei die Füllmasse ferner mindestens ein nicht-texturiertes Pflanzenprotein, vorzugweise ein nicht-texturiertes Erbsenprotein, enthält.

6. Lebensmittel gemäß einem der Ansprüche 1 bis 5, wobei die Füllmasse ferner mindestens einen weiteren Bestandteil ausgewählt aus der Gruppe bestehend aus Fetten, Ölen, Verdickungsmitteln, Emulgatoren, Wasser, Aromastoffen, Geschmackstoffen, Gewürzen, Salz, pH-Regulatoren, Farbstoffen, färbenden Lebensmitteln, Antioxidantien, Konservierungsmitteln und Frischhaltern enthält.

7. Lebensmittel gemäß einem der Ansprüche 1 bis 6, wobei die Füllmasse folgendes enthält:
30 Gew.-% bis 50 Gew.-%, vorzugweise 35 Gew.-% bis 45 Gew.-%, von dem Nasstexturat;
1 Gew.-% bis 10% Gew.-%, vorzugsweise 3 Gew.-% bis 7 Gew.-%, von dem Trockentexturat;
0,1 Gew.-% bis 5 Gew.-%, vorzugsweise 0,5 Gew.-% bis 3 Gew.-%, von einem oder mehreren Verdickungsmitteln;
0,00 Gew.-% bis 15 Gew.-%, vorzugsweise 5 Gew.-% bis 10 Gew.-%, von einem oder mehreren Fetten und/oder Ölen;
0,00 Gew.-% bis 5 Gew.-%, vorzugweise 0,2 Gew.-% bis 2 Gew.-%, von einem oder mehreren Aromastoffen;
0,00 Gew.-% bis 10 Gew.-%, vorzugsweise 5 Gew.-% bis 10 Gew.-%, von einem oder mehreren Geschmacksstoffen;
0,00 Gew.-% bis 1 Gew.-%, vorzugsweise 0,2 Gew.-% bis 0,4 Gew.-%, Salz;
0,00 Gew.-% bis 5 Gew.-%, vorzugsweise 2 Gew.-% bis 4 Gew.-% von einem oder mehreren Frischhaltern;
0,00 Gew.-% bis 1 Gew.-%, vorzugsweise 0,1 Gew.-% bis 0,3 Gew.-%, von einem oder mehreren Farbstoffen; und
20 Gew.-% bis 40% Gew.-%, vorzugsweise 25 Gew.-% bis 35% Gew.-%, Wasser;
wobei die Summe der Mengen aller Bestandteile der Füllmasse 100 Gew.-% nicht übersteigt.

8. Lebensmittel gemäß einem der Ansprüche 1 bis 7, wobei die essbare Membran eine auf Pflanzen-, Bakterien-, Algen und/oder Pilz-abgeleiteten Polysacchariden basierende essbare Membran ist; und insbesondere ein Salz der Alginsäure umfasst, insbesdonere Natriumalginat, Kaliumalginat, Ammoniumalginat, Calciumalginat oder Propylenglycolalginat.

9. Lebensmittel gemäß einem der Ansprüche 1 bis 7, wobei die essbare Membran aus einer Zusammensetzung gefertigt ist, die 45 Gew.-% bis 60 Gew.-% pflanzliche Polysaccharide, 18 Gew.-% bis 25 Gew.-% pflanzliches Glycerin, 2 Gew.-% bis 5 Gew.-% pflanzliches Öl und 20 Gew.-% bis 25 Gew.-% Wasser umfasst.

10. Verfahren zur Herstellung eines Lebensmittels gemäß einem der Ansprüche 1 bis 13, umfassend die folgenden Schritte:
a) Bereitstellen eines Nasstexturats, welches ein erstes Erbsenprotein enthält, wobei das Nasstexturart durch Nassextrusion einer Zusammensetzung enthaltend das erste Erbsenprotein, Wasser und gegebenenfalls ein oder mehrere weitere Bestandteile hergestellt wurde;
b) gegebenenfalls Bereitstellen eines Trockentexturats, welches ein zweites Erbsenprotein enthält, wobei das Trockentexturat durch Trockenextrusion einer Zusammensetzung enthaltend das zweite Erbsenprotein, Wasser und gegebenenfalls ein oder mehrere weitere Bestandteile hergestellt wurde, und/oder Bereitstellen eines nicht-texturierten Erbsenproteins;
c) Vermischen des Nasstexturats und gegebenenfalls Trockentexturats und/oder nicht-texturierten Erbsenproteins mit mindestens einem weiteren Bestandteil ausgewählt aus der Gruppe bestehend aus Fetten, Ölen, Verdickungsmitteln, Emulgatoren, Wasser, Aromastoffen, Geschmackstoffen, Gewürzen, Salz, pH-Regulatoren, Farbstoffen, färbenden Lebensmitteln, Antioxidantien, Konservierungsmitteln und Frischhaltern, zum Erhalt einer Füllmasse;
d) gegebenenfalls Durchführen der in Schritt c) erhaltenen Füllmasse durch einen Kutter und/oder Füllwolf; und
e) Füllen der in Schritt c) oder d) erhaltenen Füllmasse in eine Umhüllung aus einer essbaren Membran, welche ausschließlich aus vegetarischen oder vegan Rohstoffen besteht.

11. Verfahren nach Anspruch 10, bei dem der schritt b) umfasst:
- Vorquellen des Trockentexturats mit Wasser.

12. Verfahren nach einem der Ansprüche 10 bis 11, umfassend:
- Bereitstellen der Füllmasse in wurstförmiger Form;
- Benetzen der Oberfläche der Füllmasse mit einer Lösung aufweisend wenigsten eines aus Natrium, Kalium, oder Clazium;
- Führen der benetzten Füllmasse durch ein Alginsäurehaltiges oder alginathaltiges Bad.
